Europäisches Patentamt

**European Patent Office**

**Office européen des brevets**

(19)

(11) Numéro de publication: **0 061 361**
**B1**

(12) **FASCICULE DE BREVET EUROPEEN**

(45) Date de publication du fascicule du brevet:
**14.08.85**

(21) Numéro de dépôt: **82400217.4**

(22) Date de dépôt: **08.02.82**

(51) Int. Cl.⁴: **G 01 P 1/04, B 62 J 39/00**

(54) **Poulie d'entraînement, en particulier pour compteur kilométrique de bicyclette.**

(30) Priorité: **23.03.81 FR 8105716**

(43) Date de publication de la demande:
**29.09.82 Bulletin 82/39**

(45) Mention de la délivrance du brevet:
**14.08.85 Bulletin 85/33**

(84) Etats contractants désignés:
**BE DE GB IT LU NL**

(56) Documents cités:
**CH - A - 106 916**
**FR - A - 591 340**
**FR - A - 873 893**
**FR - A - 2 426 906**
**US - A - 4 212 482**

(73) Titulaire: **HURET ET SES FILS Société dite:, 60 Avenue Félix Faure, F-92000 Nanterre (FR)**

(72) Inventeur: **Huret, Roger, Décédé (FR)**

(74) Mandataire: **Moncheny, Michel et al, c/o Cabinet Lavoix 2 Place d'Estienne d'Orves, F-75441 Paris Cedex 09 (FR)**

ACTORUM AG

La présente invention a pour objet une poulie d'entraînement, notamment pour compteur kilométrique de cycle ou motocycle, destinée à être fixée en position adjacente à un flasque de moyeu de roue, coaxialement à ce moyeu, comportant un anneau à gorge sur lequel sont prévus trois appendices orientés axialement, dont l'extrémité libre est munie d'un bec destiné à venir en prise avec la périphérie du flasque de moyeu.

Dans les poulies d'entraînement connues de ce type, qui sont en principe en matière plastique moulée, les trois becs d'accrochage prévus à l'extrémité libre des appendices respectifs doivent définir un cercle dont le diamètre est à peu près égal à celui du flasque. Lorsque les deux diamètres sont différents, le montage de la poulie peut à la rigueur être exécuté en recourant à un expédient peu satisfaisant, consistant par exemple à utiliser trois bandelettes en métal dont une extrémité est reliée à la poulie et à l'autre extrémité de laquelle est formé, de façon adaptée à la géométrie de la roue, un repli accroché aux rayons.

On a certes déjà proposé de réaliser des anneaux formant poulie munis de plusieurs groupes de trois appendices qui, dans chaque groupe, correspondent à un diamètre de flasque différent, les appendices autres que les trois appendices utiles étant alors supprimés au moment du montage, au moyen d'un outil coupant. Un tel agencement est décrit au FR-A-2 426 906 dans lequel est décrite une roue d'entraînement de compteurs pour cycles qui peut être mise rapidement en place sur le flasque d'un moyeu de roue, quelles que soient les dimensions de ce flasque.

Cette roue d'entraînement se compose d'une partie annulaire pourvue sur sa périphérie d'une gorge destiné à recevoir la courroie. Cette partie annulaire est également pourvue, à sa périphérie, de crochets déportés latéralement de la partie annulaire de manière qu'il soit possible de venir les encliqueter sur la périphérie du flasque du moyeu de roue. Ces crochets sont disposés en six séries délimitant chacune un cercle coaxial à l'axe de la roue. Outre qu'elle entraîne un gaspillage de matière, cette solution exige beaucoup d'attention de la part du monteur, qui risque de se tromper de façon irréparable dans le choix des appendices à conserver.

Le but de l'invention est de réaliser une poulie d'entraînement qui, tout en étant de fabrication relativement simple, permet une adaptation sûre à des diamètres de flasque différents. Cette poulie est caractérisée en ce que sur l'anneau est formée une couronne plate s'étendant vers l'extérieur, sur laquelle, en chacun de trois emplacements uniformément espacés circonférentiellement, est articulé par l'une de ses extrémités un bras dont l'autre extrémité porte l'appendice axial, et qui peut être retenu sélectivement dans l'une de plusieurs positions angulaires correspondant chacune à un diamètre différent du cercle fictif, concentrique à l'anneau, sur lequel se situe le bec de l'appendice.

En prévoyant pour le mouvement angulaire de chaque bras pivotant une amplitude suffisante, avec des points de retenue établis en conséquence, il est possible de définir pour les diverses positions des trois becs d'accrochage des cercles de diamètre différent, en nombre approprié pour correspondre à tous les diamètres de flasques de moyeu qui se présentent dans la pratique.

Chaque bras articulé, qui comme la poulie elle-même est de préférence en matière plastique, peut avoir une forme plate, de manière à venir en contact glissant avec une face lisse de la couronne, et comporter sur sa face qui est opposée à l'appendice axial au moins un tenon guidé dans une fente, ou rainure, formée dans la face de la couronne plate qui est opposée à la face lisse, cette fente présentant la forme d'un arc de cercle centré sur l'axe d'articulation du bras. La fente, ou chaque fente, est avantageusement crantée, de manière à définir les positions angulaires voulues du bras, qui peuvent être identifiées par une graduation appropriée tracée par exemple sur la face lisse de la couronne.

Suivant une disposition préférée chaque bras est muni de deux tenons situés respectivement au droit de l'appendice terminal et dans une position intermédiaire entre l'appendice et l'extrémité articulée, le tenon intermédiaire étant guidé dans l'une ou l'autre de deux fentes, ou rainures, formées dans la couronne, de part et d'autre du point d'articulation du bras, auxquelles correspondent respectivement une plage de réglage de l'appendice située entre les deux bords de la couronne et une autre plage, extérieure à la couronne.

L'invention sera explicitée de façon purement indicative au cours de la description qui va suivre, en référence au dessin annexé, dans lequel:

— la fig. 1 est une vue schématique en perspective d'un flasque de moyeu de roue de bicyclette à proximité duquel une poulie d'entraînement suivant l'invention est fixée, au moyen de becs en prise avec le bord circulaire du flasque;

— la fig. 2 est une vue en élévation, à plus grande échelle, de la poulie;

— la fig. 3 est une vue en coupe suivant la ligne 3–3 de la figure 2;

— la fig. 4 est une vue en coupe, suivant la ligne 4–4 de la figure 3.

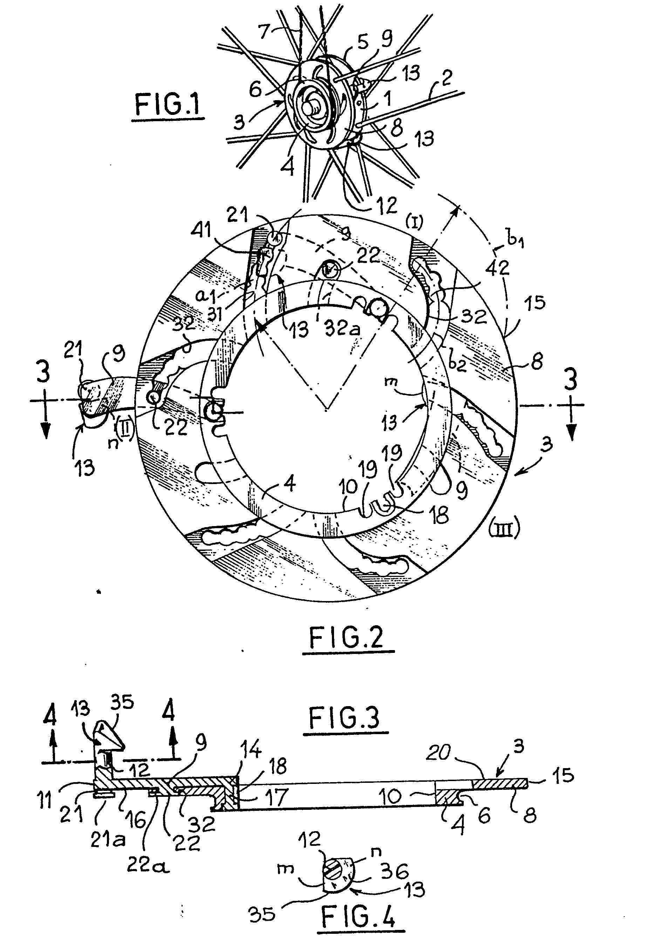

Sur la figure 1 est représenté un flasque 1 de contour circulaire, à la périphérie 5 duquel est fixée, de façon classique, l'une des extrémités d'un certain nombre de rayons 2 d'une roue de bicyclette. En position adjacente à la face externe du flasque 1 est montée, concentriquement au flasque, une poulie 3 en matière plastique moulée comportant un anneau 4 sur une gorge 6 duquel passe une courroie 7 pour l'entraînement d'un compteur kilométrique, non représenté. Le flanc de la gorge 6 de l'anneau 4, qui est adjacent au flasque 1, se prolonge radialement vers l'extérieur sous la forme d'une couronne plate 8 sur laquelle sont fixés, en des emplacements I, II, III espacés circonférentiellement de 120°, trois bras 9, également en matière plastique, à l'extrémité libre 11 de chacun desquels est formé un appendice 12, orienté axialement, dont l'extrémité libre est munie d'un organe d'accrochage 13, en forme de bec, qui est en prise avec le bord circulaire 5 du flasque 1, en maintenant ainsi en position centrée la poulie 3.

La position radiale des becs d'accrochage 13 est déterminée sélectivement, de manière à correspondre au diamètre du flasque 1 avec lequel ils sont mis en prise, en vertu du montage pivotant des bras 9.

A cet effet chaque bras 9, qui est de forme plate, comporte à son extrémité 14 et sur sa face 16, qui sont opposées à l'appendice 12, un axe d'articulation 17 qui est engagé à travers l'anneau 4 dans une encoche 18 formée sur le bord interne 10 de ce dernier et y est retenu radialement et axialement grâce, d'une part à un rétrécissement de l'ouverture d'accès de l'encoche dont les deux bords, rendus flexibles par la présence de deux encoches adjacentes 19, peuvent être écartés élastiquement au montage, d'autre part à une forme en T de l'extrémité de l'axe 17 qui est opposée à la face 16 en contact glissant avec la face plane adjacente 20 de la couronne 8.

Sur cette même face 16 font saillie deux tenons 21, 22 disposés respectivement au droit de l'appendice 12 et en position intermédiaire entre cet appendice et l'axe 17. Le tenon extrême 21 peut être inséré dans une fente 31 de la couronne 8 et y être retenu dans une position déterminée sélectivement par un crantage 41 formé sur les bords de cette fente. Quant au tenon intermédiaire 22 il peut lui-même, ou bien être inséré dans une fente 32, opposée à la fente 31 par rapport à l'axe 17, et y être retenu dans une position déterminée sélectivement par un crantage 42 formé sur les bords de la fente 32, lorsque l'extrémité du bras 9 portant l'appendice 12 et le tenon 21 est située au-delà du bord extrême 15 de la couronne 8, comme c'est le cas à l'emplacement II de la figure 2, ou bien être guidé dans une fente lisse 32a située, par rapport à l'axe 17, du même côté que la fente crantée 31 lorsque le tenon extrême 21 est reçu dans cette dernière fente, ce qui est le cas aux emplacements I et III de la figure 2.

Les trois fentes 31, 32, 32a ont, bien entendu, la forme d'arcs de cercle dont le centre coïncide avec l'axe d'articulation 17.

Il ressort de ce qui précède que le cercle fictif défini par les appendices 12 des trois bras articulés 9 peut avoir un diamètre compris entre une valeur minimale, égale à peu près au diamètre de l'ouverture interne de l'anneau 4, correspondant au cas de l'emplacement III, où le bras 9 est en position tangentielle, son bord concave étant alors confondu avec le bord interne 10 de la couronne 8, et une valeur maximale, pour laquelle le bras 9 est déployé dans une position pratiquement radiale, comme c'est le cas dans l'emplacement II.

L'extrémité munie de l'appendice 12 et du bec 13 de chaque bras articulé peut ainsi évoluer sur une première plage de réglage, correspondant au déplacement sur l'arc de cercle $a_1$ du tenon extrême 21 dans la fente crantée 31, entre la position tangentielle de l'emplacement III et la position-limite de l'emplacement I, et sur une seconde plage de réglage, définie par l'arc de cercle $b_1$ situé tout entier à l'extérieur de la couronne 8, correspondant au déplacement sur l'arc de cercle $b_2$ du tenon intermédiaire 22 dans la fente crantée 32.

Comme on le voit à la figure 3, chaque tenon 21, 22 comporte une tête élargie 21a, 22a, coopérant avec une fente de guidage, telle que 32, de profil complémentaire, de sorte que le tenon est retenu axialement dans sa fente.

Du fait que sur le bord 5 du flasque 1 doit pouvoir s'accrocher le bec terminal 13 dans toutes les positions angulaires de réglage des bras 9, qui sont comprises entre une position tangentielle et une position radiale, l'appendice 12 a une forme cylindrique et le bec 13 a approximativement la forme d'un quart de cône 35 dont la base définit un épaulement plat 36 en forme de secteur circulaire qui, par ses parties extrêmes $m$, $n$, peut être retenu par le flasque 1 dans les positions respectivement tangentielle et radiale du bras 9.

**Revendications**

1. Poulie d'entraînement, notamment pour compteur kilométrique de cycle ou motocycle, destinée à être fixée en position adjacente à un flasque (1) de moyeu de roue, coaxialement à ce moyeu, comportant an anneau (4) à gorge (6) sur lequel sont prévus trois appendices (12) orientés axialement, dont l'extrémité libre (11) est munie d'un bec (13) destiné à venir en prise avec la périphérie (5) du flasque (1) de moyeu, caractérisée en ce que sur l'anneau (4) est formée une couronne plate (8) s'étendant vers l'extérieur, sur laquelle, en chacun de trois emplacements (I, II, III) uniformément espacés circonférentiellement, est articulé par l'une de ses extrémités (14) un bras (9) dont l'autre extrémité (11) porte l'appendice axial (12) et qui peut être retenu sélectivement dans l'une de plusieurs positions angulaires correspondant chacune à un diamètre différent du cercle fictif, concentrique à l'anneau, sur lequel se situe le bec (13) de l'appendice (12).

2. Poulie suivant la revendication 1, caractérisée en ce que chaque bras (9) est articulé sur la couronne (8) au voisinage du bord interne de cette dernière, qui coïncide avec le bord interne (10) de l'anneau (4).

3. Poulie suivant l'une des revendications 1 et 2, caractérisée en ce que chaque bras (9) est de forme plate et sa face (16), qui est opposée à l'appendice (12), a un contact glissant avec la face plane de la couronne (8) qui est opposée à l'anneau (4).

4. Poulie suivant l'une des revendications 1 à 3, caractérisée en ce que sur la face (16) de chaque bras (9) qui est opposée à l'appendice (12) est formé au moins un tenon (21, 22) guidé dans une fente (31, 32), ou rainure, ménagée dans la couronne, ayant la forme d'un arc de cercle dont le centre coïncide avec l'axe (17) d'articulation du bras sur la couronne (8).

5. Poulie suivant la revendication 4, caractérisée en ce que la fente (31, 32), ou rainure, est munie d'un crantage (41, 42), ou moyen équivalent, pour définir la position de réglage angulaire du bras (9) correspondant.

6. Poulie suivant l'une des revendications 4 et 5, caractérisée en ce que le tenon (21), ou l'un des tenons, est prévu au droit de l'appendice (12).

7. Poulie suivant l'une des revendications 4 à 6, caractérisée en ce que le tenon (22), ou l'un des tenons, est prévu en une position intermédiaire entre les extrémités (11, 14) du bras (9).

8. Poulie suivant la revendication 7, caractérisée en ce que pour le guidage du tenon intermédiaire (22) sont prévues deux fentes (32a, 32), ou rainures, situées de part et d'autre du point d'articulation (17) du bras (9), auxquelles correspondent respectivement une plage de réglage de l'appendice (12) entre les deux bords (10, 15) de la couronne (8) et une autre plage de réglage située à l'extérieur de la couronne.

9. Poulie suivant l'une des revendications 4 à 8, caractérisée en ce que chaque tenon (21, 22) comporte une tête élargie (21a, 22a) qui coopère avec un profil complémentaire de la fente de guidage (31, 32), de sorte que le tenon est retenu axialement dans la fente.

10. Poulie suivant l'une des revendications 1 à 9, caractérisée en ce que l'un des bords de chaque bras (9) a une forme concave, telle que ce bord coïncide avec le bord interne (10) de la couronne (8), pour la position tangentielle du bras.

11. Poulie suivant l'une des revendications 1 à 10, caractérisée en ce que le bec d'accrochage (13) a une forme qui définit un épaulement plat (36), par exemple en forme de secteur circulaire, permettant une mise en prise avec le flasque de moyeu (1) dans toutes les positions de réglage angulaire du bras (9).

**Patentansprüche**

1. Triebscheibe, insbesondere für einen Fahrrad- oder Moped-Kilometerzähler, die in einer Position in der Nähe eines Flansches (1) einer Radnabe koaxial zu dieser Nabe befestigbar ist, und die einen mit einer Kehle (6) versehenen Ring (4) aufweist, an welchem drei axial ausgerichtete Ansätze (12) vorgesehen sind, an deren freien Enden (10) sich jeweils ein Haken befindet, der mit dem Rand (5) des Flansches (1) in Eingriff bringbar ist, dadurch gekennzeichnet, dass an dem Ring (4) ein sich nach aussen erstreckender flacher Kranz (8) ausgebildet ist, an dem an drei längs des Umfangs des Kranzes gleichförmig beabstandeten Stellen (I, II, III) jeweils ein Arm (9) mit einem seiner Enden (14) schwenkbar montiert ist, dessen anderes Ende (11) den axialen Ansatz (12) trägt und der wahlweise in einer von mehreren Winkelpositionen festgehalten werden kann, die jeweils unterschiedlichen Durchmessern des gedachten, zu dem Ring konzentrischen Kreises entsprechen, auf dem sich der Haken des Ansatzes (12) befindet.

2. Triebscheibe nach Anspruch 1, dadurch gekennzeichnet, dass jeder der Arme (9) auf dem Kranz (8) in der Nähe von dessen innerem Rand, der mit dem inneren Rand (10) des Rings (4) zusammenfällt, schwenkbar montiert ist.

3. Triebscheibe nach einem der Ansprüche 1 und 2, dadurch gekennzeichnet, dass die Arme (9) eine flache Form haben und dass ihre dem Ansatz (12) abgewandte Seite (16) mit der dem Ring (4) abgewandten flachen Seite des Kranzes (8) in gleitender Berührung stehen.

4. Triebscheibe nach einem der Ansprüche 1 bis 3, dadurch gekennzeichnet, dass auf der dem Ansatz (12) abgewandten Seite (16) jedes Arms (9) wenigstens ein Zapfen (21, 22) gebildet ist, der in einem in dem Kranz (8) angebrachten Schlitz (31, 32) oder einer Nut geführt ist, der die Form eines Kreisbogenstücks hat, dessen Zentrum mit der Schwenkachse (17) des Arms auf dem Kranz (8) zusammenfällt.

5. Triebscheibe nach Anspruch 4, dadurch gekennzeichnet, dass der Schlitz (31, 32) oder die Nut mit Rastungen (41, 42) oder ähnlichen Mitteln versehen ist, durch welche die einstellbare Winkelposition des entsprechenden Arms (9) festlegbar ist.

6. Triebscheibe nach einem der Ansprüche 4 und 5, dadurch gekennzeichnet, dass der Zapfen (21) oder die Zapfen fluchtend zu dem Ansatz (12) angeordnet ist bzw. sind.

7. Triebscheibe nach einem der Ansprüche 4 bis 6, dadurch gekennzeichnet, dass der Zapfen (22) oder die Zapfen in einer mittleren Position zwischen den Enden (11, 14) des Arms (9) angeordnet ist bzw. sind.

8. Triebscheibe nach Anspruch 7, dadurch gekennzeichnet, dass zur Führung des mittleren Zapfens (22) zwei Schlitze (32a, 32) oder Nuten vorgesehen sind, die zu beiden Seiten der Schwenkachse (17) des Arms (9) liegen und denen jeweils ein zwischen den beiden Rändern (10, 15) des Kranzes (8) bzw. ein ausserhalb des Kranzes liegender anderer Bereich zur Positionseinstellung des Ansatzes (12) entspricht.

9. Triebscheibe nach einem der Ansprüche 4 bis 8, dadurch gekennzeichnet, dass jeder Zapfen (21, 22) einen verbreiterten Kopf (21a, 22a) trägt, der mit einem komplementären Profil des Führungsschlitzes (31, 33) zusammenwirkt, derart dass der Zapfen in dem Schlitz axial gehalten ist.

10. Triebscheibe nach einem der Ansprüche 1 bis 9, dadurch gekennzeichnet, dass einer der Ränder jedes Arms (9) eine konkave Form besitzt, derart dass dieser Rand mit dem inneren Rand (10) des Kranzes (8) zusammenfällt, wenn der Arm eine tangentiale Position einnimmt.

11. Triebscheibe nach einem der Ansprüche 1 bis 10, dadurch gekennzeichnet, dass die Form des Hakens (13) durch eine flache Schulter (36), z.B. in Form eines Kreissektors, bestimmt ist, die in allen Winkeleinstellpositionen des Arms (9) einen Eingriff mit dem Flansch der Nabe (1) ermöglicht.

**Claims**

1. A drive pulley, in particular for a distance recorder of a cycle or motor cycle, adapted to be fixed in adjacent position to a flange (1) of a wheel hub, coaxially with this hub, comprising a ring (4) having a groove (6) on which are provided three axially oriented lugs (12) the free end (11) of which is provided with a nose (13) adapted to engage with the periphery (5) of the hub flange (1), characterised in that there is formed on the ring (4) a flat annular portion (8) which extends outwardly and on which there is pivotally mounted at each of three circumferentially evenly spaced apart positions (I, II, III) by one of its ends (14) an arm (9) whose other end (11) carries the axial lug (12), which arm is capable of being selectively retained in one of a plurality of angular positions each corresponding to a different diameter of the imaginary circle concentric with the ring on which the nose (13) of the lug (12) is located.

2. A pulley according to claim 1, characterised in that each arm (9) is pivotally mounted on the annular portion (8) in the vicinity of the inner edge of the latter which coincides with the inner edge (10) of the ring (4).

3. A pulley according to one of the claims 1 and 2, characterised in that each arm (9) has a flat shape and its surface (16) which is opposed to the lug (12) has a sliding contact with the planar surface of the annular portion (8) which is opposed to the ring (4).

4. A pulley according to one of the claims 1 to 3, characterised in that there is formed on the surface (16) of each arm (9) which is opposed to the lug (12) at least one stud (21, 22) guided in a slot (31, 32) or groove formed in the annular portion and having the shape of an arc of a circle whose centre coincides with the axis (17) of the pivotal mounting of the arm of the annular portion (8).

5. A pulley according to claim 4, characterised in that the slot (31, 32) or groove, is provided with step means (41, 42), or the like, for defining the position of angular adjustment of the corresponding arm (9).

6. A pulley according to claims 4 and 5, characterised in that the stud (21), or one of the studs, is provided in the region of the lug (12).

7. A pulley according to one of the claims 4 to 6, characterised in that the stud (22), or one of the studs, is provided in an intermediate position between the ends (11, 14) of the arm (9).

8. A pulley according to claim 7, characterised in that it comprises for the guiding of the intermediate stud (22) two slots (32a, 32) or grooves, located on each side of the axis (17) of pivotal mounting of the arm (9), to which slots or grooves correspond respectively a range of adjustment of the lugs (12) between the two edges (10, 15) of the annular portion (8) and another range of adjustment located outside the annular portion.

9. A pulley according to one of the claims 4 to 8, characterised in that each stud (21, 22) has an enlarged head (21a, 32a) which cooperates with a complementary profile of the guiding slot (31, 32) so that the stud is axially retained in the slot.

10. A pulley according to one of the claims 1 to 9, characterised in that one of the edges of each arm (9) has a concave shape so that this edge coincides with the inner edge (10) of the annular portion (8) for the tangential position of the arm.

11. A pulley according to one of the claims 1 to 10, characterised in that the hooking nose (13) has a shape which defines a flat shoulder (36), for example in the shape of a sector of a circle, permitting an engagement with the hub flange (1) in all the angular positions of adjustment of the arm (9).

1 / 1

## FIG.1

FIG.2

## FIG.3

## FIG.4